Europäisches Patentamt

European Patent Office

Office européen des brevets

(11) Veröffentlichungsnummer: **0 062 163**
**A1**

(12) **EUROPÄISCHE PATENTANMELDUNG**

(21) Anmeldenummer: **82101673.0**

(22) Anmeldetag: **04.03.82**

(51) Int. Cl.³: **H 04 M 1/05,** H 04 R 1/08

(30) Priorität: **01.04.81 DE 3113042**

(43) Veröffentlichungstag der Anmeldung: **13.10.82**
**Patentblatt 82/41**

(84) Benannte Vertragsstaaten: **AT BE CH DE FR GB IT LI NL SE**

(71) Anmelder: **Peiker, Heinrich,**
**Gartenstrasse 23-27 Postfach 1929, D-6380 Bad Homburg v.d. Höhe (DE)**

(72) Erfinder: **Peiker, Heinrich,**
**Gartenstrasse 23-27 Postfach 1929, D-6380 Bad Homburg v.d. Höhe (DE)**

(74) Vertreter: **Keller, René, Dr. et al, Patentanwälte Hartmut Keller, Dr. René Keller Postfach 12, CH-3000 Bern 7 (CH)**

(54) **An einem Schutzhelm zu tragende Hörsprechgarnitur.**

(57) Ein Wandlergehäuse (11) ist schwenkbar und in der Höhe verstellbar an einer am Helmrand (8) festklemmbaren Klemmvorrichtung (1) angelenkt (12–17). Das Wandlergehäuse (11) hat eine längliche, zum freien Ende (22) hin gekrümmt verlaufende Form und ist aus zwei Kunststoffschalen (18, 19) zusammengesetzt. Die Hörkapsel (31) ist im an die Klemmvorrichtung (1) angelenkten Gehäuseteil (30) angeordnet. Die Mikrofonkapsel (24) befindet sich im freien Gehäuseendteil (23) in unmittelbarer Nähe des an der Krümmungsaußenseite des Gehäuseendes (22) vorgesehenen Schalleinlasses (26).

Das Wandlergehäuse (11) ist einfach herstellbar und robust. Weil der Schalleinlaß (26) dicht bei der Mikrofonkapsel angeordnet ist, wird der Frequenzgang der Sprache nicht beeinträchtigt.

An einem Schutzhelm zu tragende Hörsprechgarnitur

Die Erfindung betrifft eine an einem Schutzhelm zu tragende Hörsprechgarnitur gemäss dem Oberbegriff des Patentanspruchs 1.

Eine Hörsprechgarnitur dieser Art ist aus der veröffentlichten europäischen Patentanmeldung EP 19 838 A1 bekannt. Die bekannte Garnitur hat ein Wandlergehäuse, dessen oberer, die Hörkapsel enthaltende Teil gelenkig mit einer am Helmrand festklemmbaren Befestigungsvorrichtung verbunden ist und an dessen unterem, die Mikrofonkapsel enthaltenden Teil ein biegsamer Schalleiter angelenkt ist, der am freien Ende eine Einspracheöffnung hat. Der Schalleiter ist biegsam und hat eine die ihm erteilte Biegung selbsthaltende Eigensteifigkeit.

Nachteilig ist, dass der Schalleiter akustisch einen Tiefpass bildet, der gerade die für die Sprachverständlichkeit wesentlichen, hohen Frequenzen unterdrückt. Zudem kann der Schalleiter durch einen unbeabsichtigten Schlag verstellt werden und nach öfterem beabsichtigten oder unbeabsichtigten Verstellen seine selbsthaltende Eigensteifigkeit verlieren, womit die Garnitur unbrauchbar wird. Die Herstellung der Garnitur mit dem Wandlergehäuse und dem Schalleiter erfordert ausserdem mehrere Arbeitsgänge und ist deshalb verhältnismässig teuer.

Der Erfindung liegt die Aufgabe zugrunde, eine Hörsprechgarnitur zu schaffen, die einfach und billig herstellbar ist, den Frequenzgang der vom Mikrofon zu empfangenden Sprache nicht beeinträchtigt, robust ist und ihre jeweils eingestellte Lage auch nach längerem Gebrauch und bei unbeabsichtigten Schlägen zuverlässig beibehält.

Die erfindungsgemässe Lösung dieser Aufgabe ist Gegenstand des Patentanspruchs 1. Bevorzugte Ausführungsarten sind in den Patentansprüchen 2 bis 10 umschrieben.

Im folgenden wird ein Ausführungsbeispiel der Erfindung anhand der Zeichnung näher erläutert. Es zeigen:

Fig. 1 eine perspektivische Ansicht einer Hörsprechgarnitur, die mit einer Klemmvorrichtung an die Regenrinne am Rand eines Schutzhelms geklemmt ist,

Fig. 2 eine geschnittene Seitenansicht der mit der Klemmvorrichtung an die Regenrinne geklemmten Garnitur nach Fig. 1 und

Fig. 3 eine geschnittene Seitenansicht der an einen anders geformten Helmrand geklemmten Klemmvorrichtung der Hörsprechgarnitur nach Fig. 1.

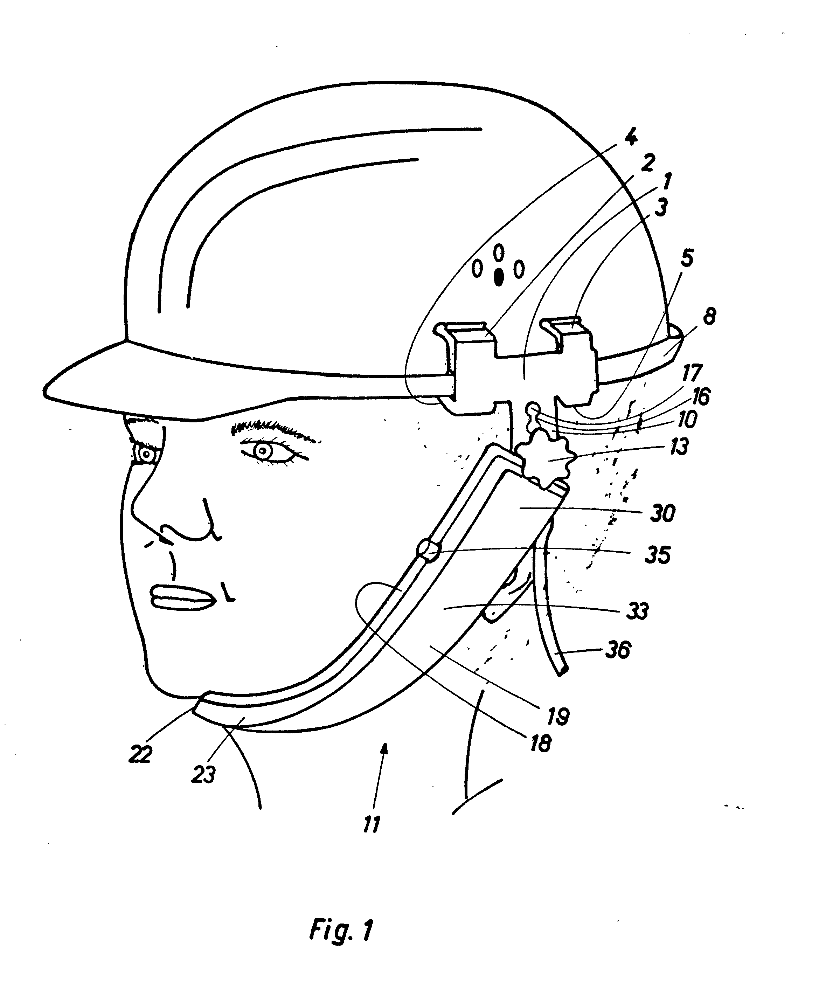

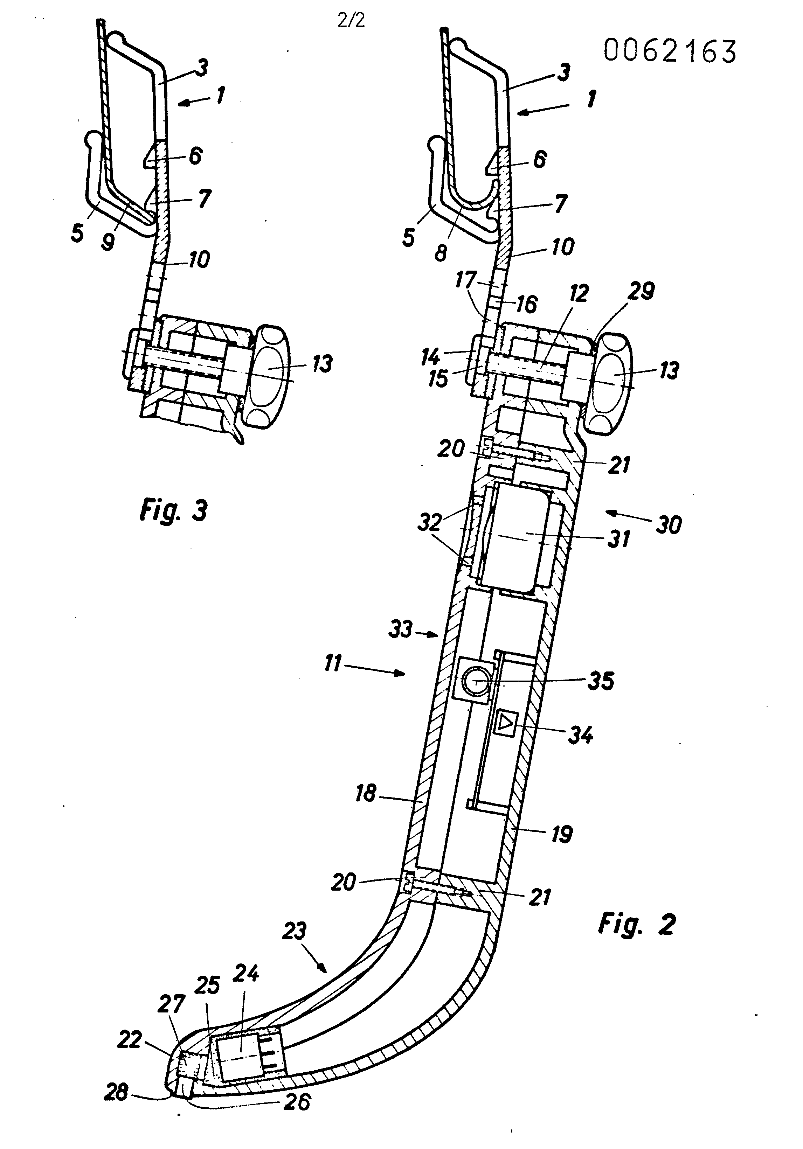

Die dargestellte Hörsprechgarnitur hat eine Klemmvorrichtung 1, mit der sie an unterschiedlich geformten Helmrändern festgeklemmt werden kann. Die Klemmvorrichtung 1 weist zwei an der Helmaussenseite und zwei an der Helminnenseite abzustützende, abgewinkelte Teile 2, 3 und 4, 5 auf, deren erstere mit je zwei übereinander angeordneten Nasen 6, 7 versehen sind. In Fig. 1 und 2 ist die Klemmvorrichtung 1 an einen Helm geklemmt, dessen Helmrand 8
zur Bildung einer Regenrinne nach oben gekrümmt ist. Dabei
liegt der gekrümmte Randteil des Helms auf den unteren
Nasen 7 und die oberen Nasen 6 ragen über die Randkante
des Helms. In Fig. 3 ist die Klemmvorrichtung 1 an einen
Helm geklemmt, dessen Helmrand 9 schräg nach aussen gekrümmt ist. Dabei liegt der abgebogene Helmrandteil auf
den Teilen 4, 5 und die unteren Nasen 7 ragen über die
Randkante des Helms. An der Klemmvorrichtung 1 ist eine
nach unten ragende Verbindungslasche 10 angeformt, an die
ein Wandlergehäuse 11 angelenkt ist. Die Gelenkachse bildet der Bolzen 12 einer Schraube, auf der eine Spannmutter
13 mit Federring 29 sitzt und deren Schraubenkopf 14 einen
durch eine Stufe gebildeten Ansatz 15 hat. Die Verbindungslasche 10 hat einen nach unten verlaufenden Schlitz 16,
dessen Breite dem Schraubenbolzen 12 angepasst ist und der
mehrere, dem Ansatz 15 angepasste Erweiterungen 17 aufweist.

Das Wandlergehäuse 11 besteht aus zwei Kunststoffschalen
18 und 19, die an je zwei in den Schalenhohlraum ragenden
Stegen 20, 21 miteinander verschraubt sind und eine längliche, starre Gehäuseform bilden, die zum freien Gehäuseende 22 hin gekrümmt verläuft, so dass dieses vor den Mund
der den Helm tragenden Person geschwenkt werden kann. Im
freien, in der dargestellten Lage unteren Endteil 23 des
Wandlergehäuses 11 ist eine Elektret-Mikrofonkapsel 24 mit
Kugelcharakteristik angeordnet. Die Kapsel 24 ist in einen
offenporigen Schaumkunststoff 25 eingebettet, der sich
auch über ihre Schalleintrittsöffnung erstreckt und Erschütterungen sowie Körperschall dämpft, der z.B. durch
Reibung des Anschlusskabels 36 an der Kleidung entstehen
kann. Der Schalleinlass 26 für die Mikrofonkapsel 24 ist

0062163

am Ende 22 und zwar an der Krümmungsaussenseite des Endteils 23 in unmittelbarer Nähe der Mikrofonkapsel 24 angeordnet und durch einen insbesondere als Wind- und Atemgeräuschschutz dienenden Sintermetallkörper 27 mit der
durch den Schaumkunststoff 25 geschützten Mikrofonöffnung
verbunden. Der Schalleinlass 26 ist durch eine am Gehäuse 11 vorstehende Tropfkante 28 begrenzt, an der am
Gehäuse herablaufende Wassertropfen hängenbleiben und abtropfen, so dass keine Gefahr besteht, dass diese den
Schalleinlass 26 verschliessen. Die Mikrofonkapsel 24 kann
auch eine andere, zum Beispiel eine nierenförmige Charakteristik haben, wobei ein zweiter Schalleinlass (mit einer
zweiten Tropfkante) am Endteil 23 erforderlich ist.

Im in der dargestellten Lage oberen Teil 30 des Wandlergehäuses 11, durch den die Drehgelenkachse 12 hindurchgeht, sind eine Hörkapsel 31 angeordnet und Schallauslässe
32 vorgesehen. Der Abstand der Hörkapsel 31 von der Drehgelenkachse 12 ist möglichst klein zu halten. In der Zeichnung ist ein für die im folgenden beschriebene Wirkungsweise gerade noch zulässiger Abstand gewählt. Zwischen
der Mikrofonkapsel 24 und der Hörkapsel 31 ist im mittleren Gehäuseteil 33 ein Mikrofonverstärker 34 (oder ein
Anpassungsglied), eine seitlich vorstehende Sprechtaste
35 sowie ein (nicht dargestellter) Empfindlichkeitsregler
für den Mikrofonverstärker angeordnet. Ferner kann am mittleren Teil 33 ein Lautstärkeregler für die Hörkapsel 31
angeordnet sein. Die Garnitur ist mit einem Anschlusskabel
36 an ein (nicht dargestelltes) Sprechfunksende- und
-empfangsgerät angeschlossen.

Nachdem die Garnitur mit der Klemmvorrichtung 1 am Helmrand 8 bzw. 9 festgeklemmt ist, wird das Gehäuse 11 bei gelöster Spannmutter 13 und damit im Schlitz 16 hin- und
herschiebbarem Schraubenbolzen 12 so eingestellt, dass
die Schallauslässe 32 auf der Höhe des Ohrs der den Helm
tragenden Person liegen. Beim anschliessenden Anziehen der
Spannmutter 13 rutscht der Ansatz 15 in die nächstliegende
Erweiterung 17, so dass der die Drehgelenkachse bildende
Schraubenbolzen 12 in der Höhe festgestellt bleibt, auch
wenn die Spannmutter 13 nur schwach angezogen wird, damit
das Gehäuse 11 unter Ueberwindung des Reibungswiderstands
des Drehgelenks noch geschwenkt werden kann. Wenn die
Schallauslässe 32 seitlich zum Ohr versetzt sind, kann
die Klemmvorrichtung 1 unter Ueberwindung des Reibungswiderstands der an der Helmwand abgestützten Teile 2 - 5
längs des Helmrands 8 bzw. 9 verschoben werden, bis die
Schallauslässe 32 genau vor dem Ohr liegen. Zwischen dem
Ohr und dem Wandlergehäuse 11 bleibt dabei ein Zwischenraum, so dass die Person auch mit diesem Ohr die Umgebungsgeräusche noch hören kann. Weil die Hörkapsel 31 nahe der
Drehgelenkachse 12 angeordnet ist, ändert sich ihre Höhen-
und Seitenlage beim Schwenken des Gehäuses 11 nur unwesentlich, so dass sie sowohl in der zum Sprechen gewählten
Sprechbereitschaftslage des Gehäuses, bei der sich das Gehäuseende 22 vor dem Mund der Person befindet, als auch
in einer vom Mund weggeschwenkten Ruhelage des Gehäuses
einen kleinen, eine gute Sprechfunkverständigung gewährleistenden Abstand vom Ohr hat.

Das Drehgelenk 12 - 17 kann auch eine Rastvorrichtung aufweisen, so dass das Gehäuse 11 in geeignet gewählten
Sprechbereitschafts- und Ruhelagen einrastet.

Das aus den beiden Kunststoffschalen 18, 19 zusammengesetzte Wandlergehäuse 11 ist einfach und billig herstellbar, leicht und trotzdem sehr robust. Der Reibungs- bzw.
Rastwiderstand des Drehgelenks kann mittels der Spannmutter 13 mit Federring 29 auch nach langem Gebrauch stets
so eingestellt werden, dass das Wandlergehäuse 11 auch bei
einem unbeabsichtigten Schlag seine jeweils gewählte Sprechbereitschaftslage beibehält.

Weil die Mikrofonkapsel 24 dem Schalleinlass 26 benachbart ist, d.h. kein Schalleiter dazwischen erforderlich
ist, wird der Frequenzgang der Sprache nicht beeinträchtigt.

Wenn keine Sprechbereitschaft erforderlich ist, ist das
Gehäuse 11 zweckmässig in die in Fig. 1 gezeigte Ruhelage
nach unten geschwenkt. Der an der Krümmungsaussenseite des
Gehäuseteils 23 vorgesehene Schalleinlass 26 befindet sich
dann an der Unterseite des Gehäuses 11 und ist durch dieses
vor dem direkten Einfall von Wassertropfen und durch die
Tropfkante 28 vor am Gehäuse herablaufenden Wassertropfen
geschützt. In der Sprechbereitschaftslage schützt das Gehäuse den Schalleinlass 26 zwar weniger gut, aber immer
noch ausreichend vor direktem Wassertropfeneinfall. Damit
ist auch die Mikrofonkapsel 24 vor Feuchtigkeit geschützt,
wobei der Sintermetallkörper 27 und der Schaumkunststoff
25 die Kapsel zusätzlich vor Verunreinigungen schützen.

0062163

## Patentansprüche

1. An einem Schutzhelm zu tragende Hörsprechgarnitur
mit einem die Hör- und die Mikrofonkapsel (31, 24) aufnehmenden Wandlergehäuse (11), das drehbar an einer am
Helmrand (8; 9) zu befestigenden Befestigungsvorrichtung
(1) angelenkt (12) ist, wobei die Hörkapsel (31) im
an das Drehgelenk angrenzenden Gehäuseteil (30) angeordnet ist, dadurch gekennzeichnet, dass das Wandlergehäuse
(11) eine längliche, zum freien Ende (22) hin gekrümmt
verlaufende, starre Form hat, der Schalleinlass (26) am
freien Ende (22) des Gehäuses (11) gebildet und die Mikrofonkapsel (24) dicht beim Schalleinlass (26) im freien
Gehäuseendteil (23) angeordnet ist.

2. Garnitur nach Anspruch 1, bei welcher die Befestigungsvorrichtung (1) ein vom Helmrand (8; 9) nach unten ragendes Verbindungsglied (10) hat, dadurch gekennzeichnet, dass
die Drehgelenkachse (12) in der Höhe verstellbar am Verbindungsglied (10) gelagert ist.

3. Garnitur nach Anspruch 2, gekennzeichnet durch eine
Spann- und Feststellvorrichtung (12 - 17), mit welcher
die Drehgelenkachse (12) in der Höhe feststellbar und
der Reibungs- oder Rastwiderstand des Drehgelenks bei
festgestellter Höhe der Drehgelenkachse (12) einstellbar
ist.

4. Garnitur nach einem der Ansprüche 1 bis 3, bei welcher
die Befestigungsvorrichtung eine an den Helmrand (8; 9)zu
klemmende Klemmvorrichtung (1) ist, dadurch gekennzeichnet, dass die Klemmvorrichtung (1) so ausgebildet ist, dass sie unter Ueberwindung des Reibungswiderstands entlang des
Helmrands (8; 9) verschiebbar ist.

5. Garnitur nach einem der Ansprüche 1 bis 4, dadurch gekennzeichnet, dass der Schalleinlass (26) an der Krümmungsaussenseite des freien Gehäuseendteils (23) vorgesehen ist.

6. Garnitur nach Anspruch 5, dadurch gekennzeichnet, dass
der Schalleinlass (26) von einer am Gehäuse (11) vorstehenden Tropfkante (28) begrenzt ist, damit Wassertropfen
von dieser abtropfen, ohne den Schalleinlass (26)zu verschliessen.

7. Garnitur nach einem der Ansprüche 1 bis 6, dadurch gekennzeichnet, dass zwischen dem Schalleinlass (26) und
der Mikrofonkapsel (24) ein Sintermetallkörper (27) angeordnet ist.

8. Garnitur nach einem der Ansprüche 1 bis 7, dadurch gekennzeichnet, dass die Mikrofonkapsel (24) in einem sich
auch über ihre Schalleintrittsöffnung erstreckenden, offenporigen Schaumkunststoff (25) gelagert ist.

9. Garnitur nach einem der Ansprüche 1 bis 8, dadurch gekennzeichnet, dass im mittleren Gehäuseteil (33) zwischen
Mikrofon- und Hörkapsel (24, 31) ein vorzugsweise mit
einem Empfindlichkeitsregler und einer Sprechtaste (35)
versehener Mikrofonverstärker (34) und/oder ein Lautstärkeregler für die Hörkapsel (31) angeordnet ist.

10. Garnitur nach einem der Ansprüche 1 bis 9, dadurch
gekennzeichnet, dass das Wandlergehäuse (11) aus zwei Kunststoffschalen (18, 19) zusammengesetzt ist.

RK/eb-6522
18.3.81

1/2

0062163

*Fig. 1*

0062163

**Fig. 3**

**Fig. 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 053 392 (TOKYO SHIBAURA ELECTRIC) *Seite 4, Zeile 11 - Seite 6, Zeile 31; Figuren* | 1 | H 04 M 1/05 H 04 R 1/08 |
| A | | 2,5,9, 10 | |
| | --- | | |
| D,Y | EP-A-0 019 838 (H.PEIKER) *Seite 4, Zeile 16 - Seite 6, Zeile 16; Figur 1* | 1 | |
| | --- | | |
| A | AU-B- 505 488 (GARDWELL SAFETY PTY LTD) *Seite 5, Zeile 1 - Seite 6, Zeile 5; Figuren* | 1-4 | |
| | --- | | |
| A | US-A-3 946 466 (YOSHIJIRO SAKAI) *Spalte 3, Zeile 28 - Spalte 4, Zeile 8; Figuren 5-9* | 1-4 | **RECHERCHIERTE SACHGEBIETE (Int. Cl. ³)** |
| | --- | | H 04 M 1/05 |
| A | DE-A-1 953 337 (SENNHEISER) *Seite 5, Zeile 3 - Seite 9, Zeile 33; Figuren* | 1,2,5 | H 04 R 1/08 H 04 R 1/10 A 42 B 3/00 |
| | ----- | | |

Der vorliegende Recherchenbericht wurde für alle Patentansprüche erstellt.

| Recherchenort DEN HAAG | Abschlußdatum der Recherche 07-07-1982 | Prüfer MINNOYE G.W. |
|---|---|---|